(19) Europäisches Patentamt
European Patent Office
Office européen des brevets

(11) EP 0 664 931 B1

(12) EUROPEAN PATENT SPECIFICATION

(45) Date of publication and mention of the grant of the patent:
**07.05.1997 Bulletin 1997/19**

(21) Application number: **93922595.9**

(22) Date of filing: **13.10.1993**

(51) Int Cl.[6]: **H01M 8/18**, H01M 8/04, H01M 8/20

(86) International application number:
**PCT/GB93/02109**

(87) International publication number:
**WO 94/09525 (28.04.1994 Gazette 1994/10)**

(54) **ELECTROCHEMICAL ENERGY STORAGE AND POWER DELIVERY PROCESS UTILIZING IRON-SULFUR COUPLE**

ELEKTROCHEMISCHE ENERGIESPEICHERUNG UND STROMVERSORGUNGSVERFAHREN UNTER VERWENDUNG EINES EISEN-SCHWEFEL-PAARES

STOCKAGE D'ENERGIE ELECTROCHIMIQUE ET PROCESSUS D'ALIMENTATION D'ENERGIE A L'AIDE DU COUPLE FER-SOUFRE

(84) Designated Contracting States:
**AT BE CH DE DK ES FR GB GR IE IT LI LU NL PT SE**

(30) Priority: **14.10.1992 US 961112**
**16.12.1992 US 961123**

(43) Date of publication of application:
**02.08.1995 Bulletin 1995/31**

(73) Proprietor: **NATIONAL POWER PLC**
**Swindon, Wiltshire SN5 6PB (GB)**

(72) Inventor: **ZITO, Ralph**
**Chapel Hill, NC 27514 (US)**

(74) Representative: **Allard, Susan Joyce et al**
**BOULT, WADE & TENNANT**
**27 Furnival Street**
**London EC4A 1PQ (GB)**

(56) References cited:
**US-A- 3 920 474**
**US-A- 4 069 371**
**US-A- 4 485 154**

- **PATENT ABSTRACTS OF JAPAN vol. 8, no. 13 (E-222)(1450) 20 January 1984 & JP,A,58 176 880 (KOGYO GIJUTSUIN) 17 October 1983**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 664 931 B1

## Description

The present invention relates generally to energy storage and power generation systems wherein compensating electrochemical reactions occur at opposite positive (hereinafter $+^{ve}$) and negative (hereinafter $-^{ve}$) electrodes and energy is stored in, and drawn from, an electrolyte in charge and discharge cycles. The reactions in the class of such systems of interest for the purposes of this invention are substantially reversible such that driving current into such a system charges the system by storing energy in chemical reactants. Chemical reactions take place on either side of an ion transport system (such as a membrane or multiple membranes and/or intermediate cell sections) with selective charge carriers being transported through the membrane. During power generation these chemical reactions reverse supplying current (power) to a load.

Some systems reconstitute or regenerate the reagents to restore the cell, as compared to driving current into the cell.

Such energy systems have been known for many years. Major limitations of these systems have resulted from the practical application of what seems to be a simple direct chemical process. Hazardous materials, efficiencies, system size, plugging and clogging, gas formation, "plating out" or precipitation of the materials, membrane diffusion limitations, cost of materials and cost of operation highlight the practical problems. Another limitation of such systems is the loss of power output as the system discharges.

The fundamental chemical process in these systems is characterized by a chemical equation where the action proceeds in one direction in the charging of the system and in the opposite direction during the power generation by the system. An example of a redox system is given by the following chemical equation, the term "redox" defining reactions in which a reduction and a complementary oxidation occur together.

$$\underline{\text{Eq. 1}} \qquad Cr^{2+} + Fe^{3+} \rightleftharpoons Cr^{3+} + Fe^{2+}$$

In this system, limitations exist since the chromium is expensive and the chromium and iron, meant to be on either side of a membrane, cross over contaminating the other side. This necessitates frequent reprocessing of the electrolyte. Furthermore, noble metal catalysts are required to promote the reaction. Also, the system pH must be controlled to prevent gas formation.

US-A-3920474 discloses a fuel cell which uses a source of sulfide ions as fuel in the negative chamber of a cell in which the positive and negative chambers are separated by an ion-transfer or mechanically porous membrane. The catholyte may comprise ferric chloride with the overall reaction being

$$2Fe^{3+} + S^{2-} \rightarrow S + 2Fe^{2+}$$

This system acts as a fuel cell only for the delivery of power to a load and cannot be electrically recharged.,

US-A-4485154 discloses an electrically rechargeable anionically active energy storage and power delivery system using a sulfide-polysulfide anolyte reaction and an iodide-polyiodide, chloride-chlorine or bromide-bromine catholyte reaction.

An object of this invention is to provide a redox process for energy storage and power delivery process where no solids are deposited on the electrodes and where the electrolytes can be electrically restored at least initially.

It is yet another object of the invention to provide a safe process with a sufficient power density depending upon the application needs.

Another object of this invention is to provide substantially full power even at low states of charge of the system, i. e. the system power production stays constant over time maintaining substantially the same output until close to complete discharge.

The foregoing objects are met in a process which utilizes a chemical reaction characterized by the following overall chemical equation,

$$\underline{\text{Eq. 2}} \qquad 2Fe^{3+} + S^{2-} \rightleftharpoons 2Fe^{2+} + S$$

where the ions are provided from salts of these reagents, preferably iron chloride in aqueous solution on the $+^{ve}$ side and potassium sulfide solution on the $-^{ve}$ side. It will be understood that other iron salts may also be used, such as the bromide or iodide. Whilst $K_2S$ is preferred for use in the invention, sodium sulfide, $Na_2S$, will work almost as well,

except that $Na_2S$ is much less soluble than $K_2S$.

In one aspect, the present invention provides an electrochemical process for energy storage and power delivery comprising the steps of:

(a) maintaining circulating electrolyte flows in a single cell or in an array of repeating cell structures, each cell with a chamber ($+^{ve}$ chamber) containing a $+^{ve}$ electrode and a chamber ($-^{ve}$ chamber) containing a $-^{ve}$ electrode, said chambers being separated one from another by a cation exchange membrane, wherein the electrolyte circulating in the $+^{ve}$ chamber during power delivery contains $Fe^{3+}$ ions and during energy storage contains $Fe^{2+}$, wherein the electrolyte circulating in the $-^{ve}$ chamber during power delivery contains sulfide ions and during energy storage contains polysulfide ions and wherein the electrolyte circulating in the $+^{ve}$ chamber during energy storage and power delivery additionally comprises a soluble, ionic salt, which is a sodium, potassium, lithium or ammonium salt, which acts as the charge carrier during energy storage, and

(b) at least partially electrically restoring the electrolytes in said $+^{ve}$ chambers and $-^{ve}$ chambers by reversing the polarity on the $+^{ve}$ and $-^{ve}$ electrodes and providing sufficient voltage to drive the chemical reaction in the reverse direction.

In another aspect the present invention provides an electrochemical process for energy storage and power delivery comprising the steps of:

(a) maintaining circulating electrolyte flows in a single cell or in an array of repeating cell structures, each cell with a chamber ($+^{ve}$ chamber) containing a $+^{ve}$ electrode and a chamber ($-^{ve}$ chamber) containing a $-^{ve}$ electrode, said chambers being separated one from another by a plurality of cation exchabge membranes which form at least one buffer chamber, wherein the electrolyte circulating in the $+^{ve}$ chamber during power delivery contains $Fe^{3+}$ ions and during energy storage contains $Fe^{2+}$, wherein the electrolyte circulating in the $-^{ve}$ chamber during power delivery contains sulfide ions and during energy storage contains polysulfide ions, wherein an idler electrolyte circulates through the buffer chamber and wherein the electrolyte circulating in the $+^{ve}$ chamber during energy storage and power delivery additionally comprises a soluble, ionic salt, which is a sodium, potassium, lithium or ammonium salt, which acts as the charge carrier during energy storage, and

(b) at least partially electrically restoring the electrolytes in said $+^{ve}$ chambers and $-^{ve}$ chambers by reversing the polarity on the $+^{ve}$ and $-^{ve}$ electrodes and providing sufficient voltage to drive the chemical reaction in the reverse direction.

The electrochemical reaction of Eq. 2 actually occurs in separate but dependent iron and sulfur reactions. The iron reaction takes place on the $+^{ve}$ side of the membrane and the sulfur reaction on the $-^{ve}$ side. The charge balance is provided by the transport of sodium, potassium, lithium or ammonium ions across the membrane.

When charging occurs, Eq.2 goes from right to left, and when discharging (power supplied to a load), Eq.2 goes from left to right.

The reagents involved in the process are as follows:

In the discharged state:

the $+^{ve}$ side contains $FeCl_2 + KCl + H_2O$, and

the $-^{ve}$ side $K_2S_5 + H_2O$.

In the charged state:

the $+^{ve}$ side $FeCl_3 + H_2O + KCl$, and

the $-^{ve}$ side $K_2S + H_2O$.

The stoichiometric ratio of $FeCl_3$ and $K_2S$ required to fully utilize these reagents is 4 moles $FeCl_3$ to 2.5 moles $K_2S$, according to the equation:

Eq. 2A
$$8\ FeCl_3 + 5\ K_2S \rightleftharpoons 8\ FeCl_2 + K_2S_5 + 8\ KCl$$

The primary charge carriers are potassium ions, $K^+$, which are readily transported through the ion exchange membrane. The $Fe^{3+}$ or $Fe^{2+}$ are poorly transported through the membrane despite the fact that it is a cation exchange membrane. The sulfide ions, $S^{2-}$, are anions that are not transported through the cation exchange membrane.

These transport properties are most important. Iron sulfide is insoluble in water. Hence, any transport of either sulfide across from the $-^{ve}$ side to the $+^{ve}$ side, or the transport of ferric or ferrous from the $+^{ve}$ side to the $-^{ve}$ side will result in unwanted precipitates which will clog the membrane.

In addition to the above, another feature working in favour of the system of this invention is that during discharge

the transport or charge carrier processes are going in the correct direction. That is, all positive ions are trying to move into the $+^{ve}$ side, and all $-^{ve}$ ions are attempting to move into the $-^{ve}$ side. Since the membrane is a cation exchange membrane, very few $Cl^-$ ions are lost to the $-^{ve}$ side.

During charge, however, the opposite is true, and a cell with only two compartments will not accept a charge if charge carrying ions are not present in the $+^{ve}$ chamber. Attempting to charge such a cell results in an immediate high resistance and virtually no current flows. Substantially no iron ions are transported across the membrane, and because the membrane is a cation exchange membrane, substantially no $S^{2-}$ ions are transported across it. In fact, any $S^{2-}$ attempting to migrate through the membrane reacts immediately with iron and a precipitate is formed which clogs the membrane.

To summarize, the charge carrier comprises sodium, potassium, lithium or ammonium ions, going from the $-^{ve}$ side to the $+^{ve}$ side through the membrane during the discharge portion of a cycle. The ferric ions in the $+^{ve}$ side are reduced to ferrous ions during discharge, and the $S^{2-}$ ions in the $-^{ve}$ side are oxidized to sulfur (solubilized as polysulfide ion during discharge). The total voltage for this process is 1.15 to 1.25 volts open circuit. With the

$+^{ve}$ side $Fe^{3+} + e^- \rightarrow Fe^{2+}$, providing 0.70 to 0.75 volts, and the

$-^{ve}$ side $S^{2-} \rightarrow S + 2e^-$ , providing 0.45 to 0.50 volts

During charging, $K^+$ ions are transported across the membrane from the $+^{ve}$ to the $-^{ve}$ side to balance the charge and transform $K_2S_5$ to $K_2S$. The sulfur which is present as a doubly charged polysulfide ion $S^{2-}.S_x$, (where $_x$ may be as high as 4), is reduced initially to $S^{2-}.S_{x-1}$, and eventually to $S^{2-}$. The $Fe^{2+}$ is oxidized to $Fe^{3+}$ which goes into solution and is available to re-oxidize the $S^{2-}$ ions back to sulfur during discharge.

Flow of the electrolytes on both sides of the membrane(s) is/are provided, preferably a recirculation rather than a once through flow in the majority of end uses. The recirculation of the electrolytes provides a chemical replenishment of the electrolytes which operates in the present invention in addition to the electrical restoration of the $+^{ve}$ and $-^{ve}$ electrolytes. These recirculating electrolytes are stored in independent containers where the quantity may be large enough for the specific requirements of a preferred embodiment. The circulation also allows the electrolytes to be filtered, or otherwise reconstituted on a routine basis without taking the system off-line.

As the electrolyte in the $+^{ve}$ side is circulated, ferric ions in solution are absorbed at a surface of the $+^{ve}$ electrode and/or in a porous surface layer thereof and replenished at such sites as discharge reduces the ferric to ferrous ions. In addition, the surface of the $+^{ve}$ electrode is preferably coated with an active ingredient, preferably an activated carbon, which augments the iron reaction kinetics. This combination provides iron promptly for the discharge requirements, and thus provides full power until substantially fully discharged. During this discharge the output voltage of the cell is nearly constant, with little polarization loss.

The $-^{ve}$ side has a similar electrode which absorbs the $S^{2-}$ solution for subsequent discharge and enhances performance similar to that described at the $+^{ve}$ electrode.

Mid electrodes (also defined as intermediate or bipolar electrodes) combine the above such that a $+^{ve}$ electrode is provided on one surface, and a $-^{ve}$ electrode on another surface formed on the same substrate.

Depending upon the membrane efficiency there may be some diffusion of the iron ions into the $-^{ve}$ electrode side, resulting in a reagent loss on the $+^{ve}$ side, an electrolyte composition imbalance and a coulombic loss. Restoration of electrolyte balance and re-use of any iron sulfide precipitate is accomplished during recharging via a separate system.

Alternative preferred embodiments substitute sodium, lithium, or ammonium ions, or other appropriate substitutes, for the potassium as the charge carrier and in the sulfide solution.

Other objects, features and advantages will be apparent from the following detailed description of preferred embodiments thereof taken in conjunction with the accompanying drawings in which:

FIGS. 1A and 1B are schematic views of the basic components of two cell types (A and B) used according to a preferred embodiment of the invention;

FIG. 1C is diagram of a cell array using the FIG. 1B type B cells;

FIG. 1D shows an encapsulation of an array of cells;

FIG. 1E shows a reclamation technique;

FIG. 2A is a block diagram of a full system using one or both types of the cells of FIG. 1A and FIG. 1B;

FIG. 2B shows a pH compensation cell on both sides;

FIG. 2C shows an alternative pH compensation cell in the $+^{ve}$ side utilizing a membrane;

FIG. 3 is a graph of certain cells during discharge.

FIGS. 4 and 5 are graphs of the charge/discharge characteristics of certain cells.

In the following description, reference is made to the specific system utilizing iron chloride, sodium chloride (as the charge carrier) and sodium sulfide. It will be understood, however, that other salts may be substituted for these salts, as appropriate.

Referring to the drawings, FIG. 1A shows a Type A cell 10 with a $+^{ve}$ electrode 12 and a $-^{ve}$ electrode 14. A cation

membrane 16 is formed from a heterogeneous structure made by Sybron Chemical Co. called IONAC MC3470 (Registered Trade Mark). In the above cell, the membrane 16 acts to separate the $+^{ve}$ and $-^{ve}$ sides of the cell 10 and is selected to minimize migration of iron from the $+^{ve}$ side to the $-^{ve}$ side and to minimize migration of $S^{2-}$ ions from the $-^{ve}$ to the $+^{ve}$ side. An aqueous solution 22 of $FeCl_3$, $FeCl_2$ and NaCl is provided in a chamber 22C formed between $+^{ve}$ electrode 12 and the membrane 16, and an aqueous solution 24 of $Na_2S_x$ is provided in a chamber 24C formed between the $-^{ve}$ electrode 14 and the membrane 16.

When the cell and the electrolyte system feeding it are in the charged state, a solution of ferric chloride of up to 4.0 molar concentration exists in the chamber 22C of the cell, and a solution of $Na_2S$ at 2.5 molar concentration, exists in chamber 24C of the cell. Typically, each of chambers 22C, 24C has a volume of about 200 cc. The cation membrane 16 allows the passage of charge via the transport of $Na^+$ ions.

FIG. 1A illustrates a cell which though rechargeable initially cannot be electrically recharged indefinitely. In this embodiment, the solutions should periodically be reconstituted externally to the cell and replaced. The charge carriers are the sodium ions ($Na^+$) which transfer charge through the membrane 16. During discharge (supplying power to an external load) the $Na^+$ ions are moving from the $-^{ve}$ side to the $+^{ve}$ side through the membrane. The ferric ions in the $+^{ve}$ side are being reduced to ferrous ions, and the $S^{2-}$ ions in the $-^{ve}$ side are being oxidized to sulfur (which is solubilized by the sodium sulfide). Also during discharge, the $-^{ve}$ ions are trying to move into the $-^{ve}$ side, but little $Cl^-$ is lost since the membrane is a cation exchange membrane.

The cation exchange membrane has to satisfy certain conditions with respect to conductivity and selectivity. It must freely transport $Na^+$ but exhibit a low diffusion rate for Fe cations. However, most cation exchange membranes, even the most selective, have Fe diffusion rates of the order of 500 $\mu g\ cm^{-2}\ h^{-1}\ mol^{-1}$. This effectively limits the charge/discharge cycles in a single membrane cell as eventually some iron will migrate across the membrane and react with $S^{2-}$ to form an insoluble precipitate in the membrane surface layer.

The FIG. 1B, the Type B cell is electrically rechargeable. This embodiment has, in addition to the two chambers of the type A cell, an additional middle chamber 23C separated from the other two chambers enclosing the electrodes by two cation exchange membranes 16A and 16B. The center chamber has an NaCl or NaOH solution 23 circulating through it which does not change composition (an "idler" electrolyte). When charging, Na+ ions are transported from the $+^{ve}$ side, through the middle chamber 23C (both membranes) into the $-^{ve}$ side. However, should any $Fe^{3+}$, $Fe^{2+}$ or $S^{2-}$ ions be transferred to the middle chamber they can be filtered through filter 17 out of the solution. When NaOH is in the middle chamber, any $Fe^{3+}$ or $Fe^{2+}$ ions present in that chamber will be precipitated as the hydroxide. There may be a need for pH control in either or both of chambers 22C and 24C as described later.

Using the three chamber rechargeable cell illustrated in FIG. 1B means that any precipitation will occur in the middle chamber, and can be removed without interfering with the main electrolyte flow circuits.

When charging the three chamber cell, $Na^+$ ions are transported across the cation membranes 16A and 16B from the $+^{ve}$ to the $-^{ve}$ side of the cell. The $Na^+$ ions transform the $Na_2S_5$ to $Na_2S$ and in the process S is reduced to $S^{2-}$ ions. At the $+^{ve}$ side ferric ions are produced (via oxidation of the ferrous ions at the $+^{ve}$ electrode 12) and remain in solution 22 (posilyte).

After many cycles, the middle chamber will accumulate some amount of iron sulfide precipitates, e.g., FeS and $Fe_2S_3$. These materials will eventually need to be removed from the system, or recycled. A method for the recycling or reclamation of these precipitates is shown in FIG. 1E. This method is a totally self contained process (within the energy system) and does not require the introduction of any additional chemical reagents.

As the liquid 23 is circulated to the idler tank chamber 25, it is passed through an ancillary electrochemical cell 27 specifically designed for reclamation. The $-^{ve}$ electrode 29 of this cell is porous carbon which will collect the iron sulfide precipitates as a filter in the stream of the liquid 23. The $+^{ve}$ electrode 30 is a lightly surfaced carbon composite substrate.

If the liquid 23 in the middle chamber 23C is an NaCl or KCl solution, electrolysis will generate iron within the porous carbon $-^{ve}$ electrode and $H_2S$ at the $+^{ve}$ electrode. The $H_2S$ is vented from cell 27 as a gas along line 31 back into the $-^{ve}$ electrolyte of the power cell where it reacts with NaOH or KOH to form $Na_2S$ or $K_2S$, respectively, for reuse as the energy storing reagents in the electrolyte. The reaction within the reclamation cell is as follows:

<u>Eq. 3A</u> $$FeS + H_2O - Fe^{\circ} + H_2S + \tfrac{1}{2}O_2.$$

The plated iron, Fe°, is later removed by the direct action of $Fe^{3+}$ ions in the positive side of the power cell by hydraulically switching the reclamation cell into the $+^{ve}$ electrolyte line.

If the liquid 23 in the middle chamber 23C is an NaOH or KOH solution, the reaction with the reclamation cell is:

**<u>Eq. 3B</u>** $$FeS + 2NaOH \rightarrow Fe^{\circ} + Na_2S + H_2O + \tfrac{1}{2}O_2.$$

When providing power, the cell is discharging. In both type A and type B cells similar reactions occur at the two electrodes. At the $+^{ve}$ side electrode 12, ferric ions are reduced to ferrous ions, $Fe^{3+}$ to $Fe^{2+}$, and an electron is acquired from the external circuit. At the $-^{ve}$ electrode 14 sulfide ions are oxidized to molecular sulfur which is solubilized by the sodium sulfide. The electrons produced at the $-^{ve}$ electrode form the current through a load. The chemical reaction at the $+^{ve}$ electrode produces 0.7 to 0.75 volts (open circuit) and the chemical reaction at the $-^{ve}$ electrode produces 0.45 volts (open circuit). The combined reaction produces 1.15 to 1.20 volts per cell (open circuit).

FIG. 1C shows a cell array 20 of multiple cells connected in electrical series and fluid parallel. End electrodes 12E ($+^{ve}$) and 14E ($-^{ve}$) and multiple mid-electrodes 13 (each one having a $+^{ve}$ electrode portion 12A and $-^{ve}$ electrode portion 14A) are spaced out from each other by membranes 16 and screen or mesh spacers 22D, 24D in all the cell chambers 22C, 24C, (portions of two of which 22D, 24D are shown by way of example) to form end cells $C_{E1}$ and $C_{E2}$ and an array of n# of mid cells $C_M$ (typically 10-20; but note much smaller and much higher numbers of cells can be accommodated). The end electrodes 12E ($+^{ve}$) and 14E ($-^{ve}$) have internal conductors 12F and 14F (typically copper screens) encapsulated therein and leading to external terminals 12G, 14G which are connected to external loads (e. g. to a motor M via a control circuit CONT, the motor driving a vehicle) or to power sources (e.g. a utility power grid when used as a load levelling device).

FIG. 1D shows the manner of encapsulating a cell array such as that of FIG. 1C. A cell array 20 (such as shown in FIG. 1C) is held between clamping blocks CB and dipped at one edge into a shallow container having a bath of liquid epoxy resin (not shown) therein. The epoxy resin hardens to form a wall of the battery. Flow conduits such as manifold 22M with feed tubes 22N for the $FeCl_3$/NaCl solution feed are provided (a similar arrangement (not shown) being provided for the sodium sulfide solution feed). These flow conduits are simultaneously encapsulated with the electrode and membrane edges.

The cell array is rotated 90 degrees and the process repeated three times to form four long walls. Manifolds and tubes for electrolyte withdrawal are provided at the top face. Additional encapsulation can be provided at the backs of end electrodes 12E, 14E.

An alternative approach to encapsulation is to use a dissolvable or low melting point solid to fill the cell chambers 22C, 24C, and the manifolds and tubes of essentially all cells of battery 20. The battery is then dipped in its entirety into a deep epoxy resin bath. After the epoxy resin hardens, the battery is subjected to water or other solvent fed through its circulatory path to dissolve the solid, or is heated to melt the solid.

Another effective encapsulation approach is a plate and frame structure (not shown) which has enough short-term sealing integrity to permit a single pouring of encasing polymer (epoxy). The polymer provides the long-term sealing along all edges of the electrodes and membranes.

In either embodiment of encapsulation the goal is to safeguard against: (a) cell to cell leakage; (b) leakage between tubes and between manifolds; (c) leakage to the environment; and (d) to provide short lengths of narrow cross section tubes.

FIG. 2A shows a free flow system, a power generation/storage system utilizing one or more of the cells or cell array formats 20. Each cell 20 receives electrolyte through pumps 26 and 28 for the $FeCl_3$/NaCl and $Na_2S_5$ solutions (22 and 24, respectively). The electrolytes 22 and 24 are stored in containers 32 and 34 large enough for the needs of a particular job. The tanks 32, 34 can be replaced with freshly charged electrolyte by substituting tanks containing fresh electrolyte and/or refilling them from charged supply sources via lines 32R, 34R with corresponding lines (not shown) provided for draining spent (discharged) reagent.

Fabrication of electrodes

End electrodes differ from the mid electrodes because they must have a metallic conductor embedded within the structure running across the electrode area. This is required because the resistivity of the substrate material from which they are formed is too high to allow adequate electrical conduction to an external electrical connector. For example a 25cm by 25cm square (10 inch by 10 inch square) of substrate material of 0.25 cm (0.10 inch) thickness will have a resistance of about 10 ohms where a corresponding cell has an internal resistance of about 0.01 ohms. A sheet of copper of 0.025 cm (0.010 inch) thickness with approximately the same area embedded into the electrode will reduce the effective resistance to about 100 micro ohms. The end electrodes are unipolar, whereas the mid-electrodes are bipolar. The conductor sheet is a thin screen structure embedded along the length of the end electrodes which make mechanically good contact along the current path.

The process of making the bipolar mid-electrodes is as follows. Substrates are formed of graphite flakes mixed with a plastic binder or other suitable binder, generally in a 1:1 weight ratio of such components. The mixture is freed from moisture by heating and/or desiccation methods, formed as sheets and hot pressed at temperatures and pressures appropriate to the materials used.

Then the substrates are coated on both the $-^{ve}$ and $+^{ve}$ surfaces with activated carbon particles by placing a sprinkling of such particles on mold plate surfaces and hot pressing the substrates to complete sealing of all voids in

the substrate and to embed the particles in its surfaces. Suitable types of activated carbon for use in surfacing the electrodes are G212 of North America Carbon Co., UU of Barnebey-Cheney Co., GAC of Calgon Carbon Co., or PCB of Calgon Carbon Co.

After each pressing step, the press mold and its contents are cooled under pressure by using a water cooled heat exchanger to safeguard against bowing or warping and also to ensure a compact, non-porous structure.

End electrodes are prepared by making substrates by mixing graphite flakes and a plastic binder together, in the same general manner as described for the process of making bipolar mid-electrodes.

These substrates are then formed into a sandwich with a conductive screen, e.g. a copper screen, placed therebetween. This assembly is hot pressed to form the end electrode substrate and cooled under pressure to minimize warping.

One surface of this substrate is then surfaced with activated carbon or silicon dioxide particles, or a mixture of silicon dioxide / activated carbon particles, depending on whether a $^{-ve}$ electrode or a $^{+ve}$ electrode is being formed. This is effected by placing a sprinkling of the required particles (activated carbon or silicon dioxide) on the electrode surface and hot pressing to embed the particles in the surface thereof. After each pressing step the press mold and its contents are cooled, for example using a water-cooled heat exchanger to safeguard against bowing or warping.

## Membranes

The preferred cation exchange membrane for use in the present invention is a heterogeneous structure made by Sybron Chemical Co. called IONAC MC3470 (Registered Trade Mark) or NAFION (Registered Trade Mark) made by Du Pont de Nemours. IONAC is a cation exchange membrane containing sulfonated resins as the functional materials bonded together with Kynar (Registered Trade Mark). The material is bonded to a fibrous support sheet of glass cloth or polymer fiber. The specifications for this membrane are: 0.040cm (0.016 inches) thick, 96% permselectivity and 5 ohms/square cm in 1 N NaCl.

## Compensation for migration

Because water is transferred across the membrane by osmosis or electro-osmosis, it becomes necessary to correct for this happening. This is accomplished by reverse osmosis or by evaporation of water from the appropriate electrolyte.

## Power Enhancement

The surfaces of the electrodes are coated with a porous activated carbon which acts to absorb the iron solutions in the $^{+ve}$ side and to absorb the $S2^-$ solution in the $^{-ve}$ side. The large surface areas enhance the availability of the iron and sulfur during discharge. This enhancement provides better performance by maintaining the output voltage and power even when the cell is near complete discharge. Polarization losses are low.

## pH Compensation

In the $^{+ve}$ side of a cell the pH tends to rise (become more basic) as time progresses. This is due to the diffusion of $H^+$ ions from the chloride solution in the $^{+ve}$ side to the $^{-ve}$ side, and in the $^{+ve}$ side the $FeCl_2$ and $FeCl_3$ salts in water mix with oxygen from the air forming iron oxides which eventually precipitate out of solution. To counter this the pH of the electrolyte in the $^{+ve}$ side should be kept below 4.

FIG. 2B shows a pH control system in which pH control of both the $^{+ve}$ side and the $^{-ve}$ side of the cell 10 is effected. It will be understood that pH control will be required in some circumstances in one side of the cell 10 only, and this is within the scope of the invention.

Referring to the drawing, a pH control cell 50 is positioned in the flow path of the electrolyte 22 from the $^{+ve}$ chamber 22C of cell 10. A DC current is passed from the $^{+ve}$ electrode 52 to the $^{-ve}$ electrode 54 of the cell 50 at a voltage greater than 1.6 volts (in order to overcome the open circuit voltage of the pH control cell). The $^{+ve}$ electrode 52 has an activated carbon surface 56 which absorbs the electrolyte solution 22 and catalyses the formation of HCl and HClO. At the $^{-ve}$ electrode 54 of the cell 50, iron is produced which is dissolved by the ferric ions in the electrolyte 22 to form ferrous ions.

A pH control cell 80 is positioned in the flow path of the electrolyte 24 from the $^{-ve}$ chamber 24C of the cell 10. The $^{-ve}$ side of cell 80 has a "starved" cathode 86. A DC current is passed from the $^{+ve}$ electrode 82 to the $^{-ve}$ electrode 86, electrolyzing water to produce $H_2$ gas at the cathode 86, with the $OH^-$ ions also produced raising the pH of the electrolyte solution and thus compensating for the migration of $OH^-$ ions from the $^{-ve}$ side to the $^{+ve}$ side of cell 10. The cathode 86 of cell 80 is "starved" to maximize the $OH^-$ ion production and to minimize the production of sodium sulfide. The starving of the cathode 86 is accomplished by surfacing the cathode with a thick porous layer 88 which reduces

the availability of the sodium polysulfides at the $-^{ve}$ electrode surface, thus promoting the electrolysis of water. A preferred porous surfacing for the cathode 86 is an unwoven polypropylene cloth, such as Webril cloth made by the Kendall Co.

At the $+^{ve}$ electrode of the pH control cell 80, the following reaction occurs:

$$\underline{\text{Eq. 4A}} \qquad S + Na_2S_X \rightarrow Na_2S_{X+1}$$

At the $-^{ve}$ electrode of the pH control cell 80, the following reaction occurs:

$$\underline{\text{Eq. 4B}} \qquad H_2O + e^- \rightarrow OH^- + 1/2H_2$$

The $H_2$ gas may be vented from the tank 34 by means of a vent 85.

The pH control cell 80 may, if desired, employ a membrane in order to divide the cell into a $+^{ve}$ chamber and a $-^{ve}$ chamber. In such an embodiment the $H_2$ gas product may be vented directly from the $-^{ve}$ chamber of the cell .

FIG. 2C shows a more complicated pH control cell 60 designed with two fluid chambers 72, 74 separated by a cation exchange membrane 58. This cation exchange membrane 58 permits only $H^+$ ions to transfer from the $+^{ve}$ to the $-^{ve}$ side of the pH control cell 60. The cell 60 has a $-^{ve}$ electrode 76 and a $+^{ve}$ electrode 68. The electrode $+^{ve}$ 68 is starved of $Cl^-$ ions by limiting the flow 66 of the electrolyte 22 to the anode surface by placing a diffusion limiting layer of a porous non-conductive material 67, such as fluorocarbon particles or silicon dioxide particles, on the anode surface. A DC current is passed through the cell from the $+^{ve}$ electrode 68 to the $-^{ve}$ electrode 76. At the $+^{ve}$ electrode 68 the electrolysis of water occurs forming oxygen gas at the electrode 68 and hydrogen ions in solution which are transported across the membrane 58 into the chamber 74 through which electrolyte stream 64 flows. These $H^+$ ions lower the pH of the electrolyte 22. Some chlorine is also produced at the $+^{ve}$ electrode, but it reacts with the ferrous ions in solution. The oxygen gas is vented into the main flow path 70 of the electrolyte to the chamber 22C of cell 10.

At the $+^{ve}$ side of the pH control cell 60, the following reaction occurs:

$$\underline{\text{Eq. 5}} \qquad H_2O \rightarrow 2H^+ + 1/2O_2 + 2e^-$$

At the $-^{ve}$ electrode of the pH control cell 60, iron is deposited on the $-^{ve}$ electrode 76, but the iron is dissolved by the ferric ions flowing through the chamber 74.

At the $-^{ve}$ side of the pH control cell 60, the following reaction occurs, in two steps:

$$\underline{\text{Eq. 6A}} \qquad Fe^{2+} + 2e^- \rightarrow Fe^{\circ}$$

$$\underline{\text{Eq. 6B}} \qquad Fe^{\circ} + 2Fe^{3+} \rightarrow 3Fe^{2+}$$

## Specific embodiments

The present invention will be further described with reference to the following non-limiting Examples. Examples 1 and 2 are comparative Examples carried out in cells in which no ionic salt is included in the electrolyte circulating in the $+^{ve}$ chamber during energy storage. In these comparative Examples the cells were conducted as primary devices, i.e. discharge only modes.

## EXAMPLE 1

### Fabrication of end electrodes

Two substrates were prepared by mixing graphite flakes (#4012 graphite flakes of Asbury Carbon Co.) with a polyvinylidene fluoride, PVDF, binder (Penwalt's #461) in a 1:1 weight ratio. The mixture was heated to remove moisture, formed into sheets and hot pressed at a temperature of 177°C (350°F) and a pressure of 1723 kPa (250 psi) for 10 minutes, and then cooled at the same pressure between water cooled platens.

A stack was then formed, from bottom to top, of an aluminum base plate, Teflon sheet, substrate, a copper screen (0.025 cm. thick), the other substrate, a Teflon sheet, high temperature rubber sheet, and finally another aluminum

base plate. The assembly was then pressed at 1034 kPa (150 psi) at 177°C (350°F) for 10 minutes, and then cooled at the same pressure between water-cooled platens.

The substrate to be surfaced had its edges covered with tape and was then placed on an aluminum base plate covered with a Teflon (Registered Trade Mark) sheet, and a mixture of 80% graphite and 20% Kynar (Registered Trade Mark) sprinkled over the surface. The surface of the substrate was then sprinkled with a layer of activated carbon particles (G212 of North American Carbon Co., or UU of Barnebey-Cheney Co.).

A high temperature rubber sheet was placed on top of the surfaced substrate, followed by a Teflon (Registered Trade Mark) sheet and an aluminum base plate. The structure was then pressed at 517 kPa (75 psi) at 177°C (350°F) for 10 minutes, and then cooled at the same pressure between water-cooled platens.

The tape was then removed from the edges of the surfaced side and a rubber "picture" frame placed on top of the cleared border. The electrode was then placed with the surfaced side uppermost onto an aluminum base plate covered with a Teflon (Registered Trade Mark) sheet and the top surface of the structure covered with a Teflon (Registered Trade Mark) sheet and an aluminum base plate. The edges of the assembly were pressed at 2413 kPa (350 psi) at 177°C (350°F) for 210 minutes,and then cooled at the same pressure between water-cooled platens. This step sealed the substrate sheets along the edges in order to ensure that the copper screen was totally encapsulated to prevent corrosion by the electrolyte.

Cell fabrication

A sealed single cell was made by placing a $+^{ve}$ electrode and a $-^{ve}$ electrode together with an IONAC (Registered Trade Mark) MC3470 membrane therebetween. The four edges of the cell were cast with an epoxy resin to encapsulate the cell and ports formed to allow the electrolytes to be supplied to and to be removed from the cell.

The construction of the cell ensures that the copper screens and the wires attached, which make electrical contacts to the cell, do not contact the electrolyte.

Cell Performance

The above described cell was used, with UU carbon surfaced electrodes, spaced apart 1.25 cm (0.50 inch), with the space between the electrode surface and membrane on each side being filled with G-212 porous carbon. The active area of the cell was 129 sq. cm (20 sq. in.) The electrolytes were:

| | |
|---|---|
| Positive side | 100 cc of 3 molar solution of $FeCl_3$ |
| Negative side | 100 cc of 2 molar solution of $Na_2S$ |
| Cell resistance | 0.2 ohms |

Both solutions were in the charged state initially, and the cell was setup to be discharged only.

The maximum coulombic capacity of the cell assuming that the reaction to the pentasulfide shown below

$$\text{Eq. 7} \qquad 8\ FeCl_3 + 5\ Na_2S \rightarrow 8\ FeCl_2 + 8\ NaCl + Na_2S_5$$

goes to completion was:

| | |
|---|---|
| +ve side | 7.8 AH |
| -ve side | 9.6 AH |

The capacity was limited, in these examples, by the amount of $FeCl_3$ in solution in the positive side.

Four discharges were conducted, with the electrolyte being replaced after each discharge. Electrolyte replacement was accomplished by draining the cell compartments and refilling the compartments with fresh solutions three times in order to flush out the "spent" reagents within the surface pores of the porous G-212 carbon.

Table 1 gives the data obtained from these experiments.

Table 1

| Discharge Data at The 2.0 Ampere Rate | | |
|---|---|---|
| Cycle # | AH Output | % of Reagent $Fe^{3+}$ Utilization |
| 1 | 5.5 | 71 |
| 2 | 5.0 | 64 |
| 3 | 5.2 | 67 |
| 4 | 4.8 | 62 |

EXAMPLE 2.

A cell was constructed in the manner as described in Example 1 except that the electrode-to-electrode spacing was 1.00 cm (0.40 inch). Even though the cell had static electrolytes (non-circulating) the solutions were stirred or agitated periodically to ensure adequate mixing and physical availability of ionic species at the electrode surfaces. The active area of the cell was 129 sq. cm. (20 sq. in.) with excess cell volume to accommodate additional electrolyte.

The electrolytes were:

| | |
|---|---|
| Positive side | 200 cc of 3 molar solution of $FeCl_3$ |
| Negative side | 200 cc of 2 molar solution of $Na_2S$ |
| Cell resistance | 0.08 ohms |

Both solutions were in the charged state initially, and the cell was setup to be discharged only.

The maximum coulombic capacity of the cell, assuming that the reaction to the pentasulfide shown in Eq. 7 goes to completion was:

| | |
|---|---|
| $+^{ve}$ side | 15.6 AH |
| $-^{ve}$ side | 19.2 AH |

The capacity was limited, in these examples by the amount of $FeC_3$ in solution in the positive side.

Two discharges were conducted, with the electrolyte being replaced after each discharge. The first discharge was at a 2 amp rate, and the second at a 4 amp rate. The discharge was quite flat to over 90% depth of discharge. Charge output was approximately 9 AH at useful voltages.

Figure 3 is the discharge curve which is typical of the shape of the discharge curve for non-circulating electrolytes with adequate agitation or stirring. At various times during the discharging attempts were made to recharge the cell by connecting the $+^{ve}$ and $-^{ve}$ electrodes of the cell to the $+^{ve}$ and $-^{ve}$ terminals, respectively, of a DC power supply. Within 10 to 20 seconds at less than 1 amp initial current, the cell resistance rose from its 0.2 ohms to over 100 ohms, and current diminished to less than 10 ma. Cell resistance continued to rise as long as the "charging" power supply was connected to the terminals.

Upon removal of the charging circuit and replacing the electrical load, the cell resistance decreased to its normal 0.2 ohm value, and discharging proceeded as usual. There were no observable remaining effects within the membrane as a result of the attempts to recharge electrically.

Since the available sodium ion concentration in the $+^{ve}$ side is low, $Fe^{3+}$ ions will tend to be the predominant charge carriers during "recharge". However, since substantially no $Fe^{3+}$ ions are transported across the membrane, the cation exchange membrane is rendered essentially non-conductive in the absence of charge carrying ions.

EXAMPLE 3

Cell tests in the previous two examples were conducted as primary devices, e.g. only discharge modes. These cells are essentially non-rechargeable devices because of the necessary limitations imposed by the membrane resistance to $Fe^{3+}$ transport and by the need to keep the two electrolytes apart. Only sodium ions can be allowed to migrate across the membrane during both charge and discharge with the $Fe^{3+}/S^{2-}$ couple.

In order to recharge this system electrically an ionic salt needs to be present in the $+^{ve}$ chamber during recharging and, furthermore, a configuration with more than two chambers is preferable.

A cell was assembled to characterize a rechargeable version of the above couple. The cell had static electrolytes (non-circulating) and three compartments. The $+^{ve}$ compartment contained the oxidizing agent, $FeCl_3$, and NaCl in

aqueous solution and the $+^{ve}$ electrode. The $-^{ve}$ compartment contained the reducing agent, $Na_2S$, in aqueous solution and the $-^{ve}$ electrode. A middle compartment was an isolation chamber or buffer compartment. It contained a 2 molar solution of NaCl. Each of the three compartments was separated by a cation membrane. The physical parameters of the cell were as follows:

Single cell consisting of two identical end electrodes and two cation exchange membranes.

| | |
|---|---|
| Membranes | SYBRON (Registered Trade Mark) Cation membranes, |
| Electrodes | UU carbon surfaced |

substrates, prepared as described in Example 1

| | |
|---|---|
| Compartment spacing for electrolytes | 1.25 cm (0.50 inch) |
| Active area | 129 sq. cm (20 sq. in). |

Electrolytes were:

| | |
|---|---|
| Positive side | 200 cc of 3 molar solution of $FeCl_3$ and 1.5 molar solution of NaCl |
| Negative side | 200 cc of 2 molar solution of $Na_2S$ |
| Middle compartment | 200 cc of 2 molar NaCl |
| Cell resistance | 0.1 ohms |

Both solutions were in the charged state initially.

The maximum coulombic capacity of the cell, assuming that the reaction to the pentasulfide shown in Eq. 7 goes to completion was:

| | |
|---|---|
| $+^{ve}$ side | 15.6 AH |
| -ve) side | 17.9 AH |

The capacity was limited, in these examples by the amount of $FeCl_3$ in solution in the positive side. Three partial cycles were run with the same electrolyte.

Table 2 gives the data obtained from these experiments.

Table 2

| Discharge Data at The 2.0 Ampere Rate | | | | |
|---|---|---|---|---|
| Reagent Cycle # | AH Output | AH Input | AH Efficiency | % of $Fe^{3+}$ Utilization |
| 1 | 10 | 12 | 83 | 64 |
| 2 | 12 | 14 | 86 | 77 |
| 3 | 9 | 11 | 82 | 58 |

Examination of the middle chamber electrolyte after the three discharges showed virtually no discoloration from the initial colorless and clear appearance. Only a very slight cloudiness was detected which might indicate some presence of free sulfur or other insoluble compounds such as iron sulfide compounds.

EXAMPLE 4

A cell was constructed in the manner as described in Example 1 with a UU carbon surfaced $-^{ve}$ electrode and a GAC carbon surfaced $+^{ve}$ electrode. The electrodes were separated by a Nafion (Registered Trade Mark) 117 membrane, the electrode spacing being 0.50cm. The active area of the cell was $155cm^2$.

The electrolytes were:

| | |
|---|---|
| Positive side | 150cc of solution of 3 molar $FeCl_3$ and 150cc of molar NaCl |
| Negative side | 300cc of 1.25 molar solution of $Na_2S_5$ |
| Cell resistance | 78 milliohms |

The electrolytes were recirculated through the respective compartments of the cell.

Both electrolytes were in the charged state initially. The cell was discharged and charged over two cycles at 3 amps. The results are given in Figure 4. It can be seen from these results that the charging potentials indicate a very large increase in resistance.

EXAMPLE 5

A cell was constructed in the manner as described in Example 4 with the compartments separated by Nafion (Registered Trade Mark) 117 membranes. The electrolytes circulating in the $+^{ve}$ and $-^{ve}$ compartments were as described in Example 4. The middle chamber was a buffer chamber or isolation chamber through which 350cc of a 2 molar solution of NaCl was circulated.

The spacings between the cell components were 0.25cm from $-^{ve}$ electrode to membrane. 0.62cm between the two membranes, and 0.25cm from $+^{ve}$ electrode to membrane. The active area of the cell was $155cm^2$. The cell resistance was 106 milliohms.

Both electrolytes were in the charged state initially. The cell was discharged and charged over three cycles at 3 amps. The results are given in Figure 5. It can be seen from these results that the charging potentials indicate a very large increase in resistance. The resistance of the cell is, however, lower than that of the single membrane cell used in Example 4.

**Claims**

1. An electrochemical process for energy storage and power delivery comprising the steps of:

    (a) maintaining circulating electrolyte flows in a single cell or in an array of repeating cell structures, each cell with a chamber ($+^{ve}$ chamber) containing a $+^{ve}$ electrode and a chamber ($-^{ve}$ chamber) containing a $-^{ve}$ electrode, said chambers being separated one from another by a cation exchange membrane, wherein the electrolyte circulating in the $+^{ve}$ chamber during power delivery contains $Fe^{3+}$ ions and during energy storage contains $Fe^{2+}$, wherein the electrolyte circulating in the $-^{ve}$ chamber during power delivery contains sulfide ions and during energy storage contains polysulfide ions and wherein the electrolyte circulating in the $+^{ve}$ chamber during energy storage and power delivery additionally comprises a soluble, ionic salt, which is a sodium, potassium, lithium or ammonium salt, which acts as the charge carrier during energy storage, and
    (b) at least partially electrically restoring the electrolytes in said $+^{ve}$ chambers and $-^{ve}$ chambers by reversing the polarity on the $+^{ve}$ and $-^{ve}$ electrodes and providing sufficient voltage to drive the chemical reaction in the reverse direction.

2. A process as claimed in claim 1 wherein the $Fe^{3+}$ ions are provided in the electrolyte circulating in the $+^{ve}$ chamber as the chloride, bromide or iodide salt.

3. A process as claimed in claim 1 or claim 2 wherein the ionic salt is a chloride, bromide or iodide.

4. A process as claimed in claim 3 wherein the ionic salt is sodium chloride or potassium chloride.

5. A process as claimed in any one of the preceding claims wherein the sulfide is sodium sulfide or potassium sulfide.

6. A process as claimed in any one of the preceding claims wherein the electrolytes are chemically replenished by circulating the electrolyte from each chamber to storage means comprising a volume of electrolyte greater than the cell volume for extended delivery of power over a longer discharge cycle than the cell volume alone would permit.

7. A process as claimed in any one of the preceding claims wherein the cell structures are subjected to alternate electrochemical charge / discharge cycles.

8. A process as claimed in any one of the preceding claims which additionally comprises compensating for the effect of changing pH in one or both chambers.

9. A process as claimed in claim 8 wherein the pH compensation comprises the steps of flowing the circulating electrolyte from the $+^{ve}$ chamber through a pH control cell, driving a DC current through the said pH control cell

from a $+^{ve}$ electrode to a $-^{ve}$ electrode thereof, thereby producing the $H^+$ ions and lowering the pH of the electrolyte.

**10.** A process as claimed in claim 8 wherein the pH compensation comprises the steps of flowing the circulating electrolyte from the $-^{ve}$ chamber through a pH control cell, driving a DC current through the said pH control cell from a $+^{ve}$ electrode to a $-^{ve}$ electrode thereof, thereby producing OH ions and raising the pH of the electrolyte.

**11.** A process as claimed in any one of the preceding claims wherein the $+^{ve}$ and $-^{ve}$ electrodes comprise conductive porous particles arranged to increase the available surface area of the electrodes and to increase the electrode surface wettability whereby the surface resistance of the electrodes is substantially lowered.

**12.** A process as claimed in claim 11 wherein the conductive porous particles are activated carbon particles.

**13.** An electrochemical process for energy storage and power delivery comprising the steps of:

(a) maintaining circulating electrolyte flows in a single cell or in an array of repeating cell structures, each cell with a chamber ($+^{ve}$ chamber) containing a $+^{ve}$ electrode and a chamber ($-^{ve}$ chamber) containing a $-^{ve}$ electrode, said chambers being separated one from another by a plurality of cation exchange membranes which form at least one buffer chamber, wherein the electrolyte circulating in the $+^{ve}$ chamber during power delivery contains $Fe^{3+}$ ions and during energy storage contains $Fe^{2+}$, wherein the electrolyte circulating in the $-^{ve}$ chamber during power delivery contains sulfide ions and during energy storage contains polysulfide ions, wherein an idler electrolyte circulates through the buffer chamber and wherein the electrolyte circulating in the $+^{ve}$ chamber during energy storage and power delivery additionally comprises a soluble, ionic salt, which is a sodium, potassium, lithium or ammonium salt, which acts as the charge carrier during energy storage, and
(b) at least partially electrically restoring the electrolytes in said $+^{ve}$ chambers and $-^{ve}$ chambers by reversing the polarity on the $+^{ve}$ and $-^{ve}$ electrodes and providing sufficient voltage to drive the chemical reaction in the reverse direction.

**14.** A process as claimed in claim 13 wherein the $Fe^{3+}$ ions are provided in the electrolyte circulating in the $+^{ve}$ chamber as the chloride, bromide or iodide salt.

**15.** A process as claimed in claim 13 or claim 14 wherein the ionic salt is a chloride, bromide or iodide.

**16.** A process as claimed in claim 15 wherein the ionic salt is sodium chloride or potassium chloride.

**17.** A process as claimed in any one of claims 13 to 17 wherein the sulfide is sodium sulfide or potassium sulfide.

**18.** A process as claimed in any one of claims 13 to 17 wherein the electrolytes are chemically replenished by circulating the electrolyte from each chamber to storage means comprising a volume of electrolyte greater than the cell volume for extended delivery of power over a longer discharge cycle than the cell volume alone would permit.

**19.** A process as claimed in any one of claims 13 to 18 wherein the cell structures are subjected to alternate electrochemical charge / discharge cycles.

## Patentansprüche

**1.** Elektrochemisches Verfahren zur Energiespeicherung und Stromabgabe, mit den Schritten:

a) Aufrechterhalten von Kreislaufströmungen von Elektrolyt in einer Einzelzelle oder in einer Anordnung sich wiederholender Zellenstrukturen, jede Zelle mit einer eine $+^{ve}$-Elektrode enthaltenden Kammer ($+^{ve}$-Kammer) und einer eine $-^{ve}$-Elektrode enthaltenden Kammer ($-^{ve}$-Kammer), wobei die Kammern voneinander durch eine Kationenaustauschmembran getrennt sind, wobei der in der $+^{ve}$-Kammer zirkulierende Elektrolyt während der Stromabgabe $F^{3+}$-Ionen und während der Energiespeicherung $Fe^{2+}$ enthält, und der in der $-^{ve}$-Kammer zirkulierende Elektrolyt während der Stromabgabe Sulfidionen und während der Energiespeicherung Polysulfid-Ionen enthält und wobei der in der $+^{ve}$-Kammer zirkulierende Elektrolyt während der Energiespeicherung und der Stromabgabe zusätzlich ein lösliches ionisches Salz enthält, welches ein Natrium-, Kalium-, Lithium- oder Ammoniumsalz ist und als der Ladungsträger während der Energiespeicherung wirkt und
b) mindestens teilweises elektrisches Wiederherstellen der Elektrolyten in den $+^{ve}$-Kammern und $-^{ve}$-Kammern

durch Umkehren der Polarität an den $+^{ve}$- und $-^{ve}$-Elektroden und Anlegen einer ausreichenden Spannung um die chemische Reaktion in der Umkehrrichtung anzutreiben.

**2.** Verfahren nach Anspruch 1,
bei dem die $Fe^{3+}$-Ionen in dem in der $^{ve}$-Kammer zirkulierenden Elektrolyten als das Chlorid-, Bromid- oder Iodid-Salz vorliegen.

**3.** Verfahren nach Anspruch 1 oder 2,
bei dem das ionische Salz ein Chlorid, Bromid oder Iodid ist.

**4.** Verfahren nach Anspruch 3,
bei dem das ionische Salz Natriumchlorid oder Kaliumchlorid ist.

**5.** Verfahren nach einem der vorangehenden Ansprüche,
bei dem das Sulfid Natriumsulfid oder Kaliumsulfid ist.

**6.** Verfahren nach einem der vorangehenden Ansprüche,
bei dem die Elektrolyten chemisch aufgefrischt werden durch Zirkulieren des Elektrolyten von jeder Kammer zu einer Speichereinrichtung, die ein Elektrolytvolumen größer als das Zellenvolumen aufnimmt, für eine verlängerte Stromabgabe über einen längeren Entladungszyklus, als er alleine aufgrund des Zellenvolumens möglich wäre.

**7.** Verfahren nach einem der vorangehenden Ansprüche,
bei dem die Zellenstrukturen abwechselnden elektrochemischen Lade-/Entladezyklen unterworfen werden.

**8.** Verfahren nach einem der vorangehenden Ansprüche,
bei dem zusätzlich der Effekt einer pH-Änderung in einer oder beiden Kammern kompensiert wird.

**9.** Verfahren nach Anspruch 8,
bei der die pH-Kompensation erfolgt durch Strömenlassen des zirkulierenden Elektrolyten von der $+^{ve}$-Kammer durch eine PH-Steuerzelle, Leiten eines Gleichstroms durch die PH-Steuerzelle von einer $+^{ve}$-Elektrode zu einer $-^{ve}$-Elektrode derselben, und hierdurch Erzeugen der $H^+$-Ionen und Absenken des pH des Elektrolyten.

**10.** Verfahren nach Anspruch 8,
bei dem die pH-Kompensation erfolgt durch Strömenlassen des zirkulierenden Elektrolyten von der $-^{ve}$-Kammer durch eine pH-Steuerzelle, Leiten eines Gleichstroms durch die pH-Steuerzelle von einer $+^{ve}$-Elektrode zu einer $-^{ve}$-Elektrode derselben, und hierdurch Erzeugen von $OH^-$-Ionen und Anheben des pH des Elektrolyten.

**11.** Verfahren nach einem der vorangehenden Ansprüche,
bei dem die $+^{ve}$- und $-^{ve}$-Elektroden leitfähige poröse Teilchen umfassen, die zum Vergrößern der verfügbaren Oberfläche der Elektroden und zur Erhöhung der Benetzbarkeit der Elektrodenoberfläche vorgesehen sind, wodurch der Oberflächenwiderstand der Elektroden wesentlich erniedrigt ist.

**12.** Verfahren nach Anspruch 11,
bei dem die leitfähigen porösen Teilchen Aktivkohleteilchen sind.

**13.** Elektrochemisches Verfahren zur Energiespeicherung und Leistungsabgabe, mit den Schritten:

a) Aufrechterhalten von Kreislaufströmungen eines Elektrolyten in einer Einzelzelle oder in einer Anordnung von sich wiederholenden Zellenstrukturen, jede Zelle mit einer eine $+^{ve}$-Elektrode enthaltenden Kammer ($+^{ve}$-Kammer) und einer einer $-^{ve}$-Elektrode enthaltenden Kammer ($-^{ve}$-Kammer), wobei die Kammern voneinander durch eine Anzahl von Kationenaustauschmembranen getrennt sind, die mindestens eine Pufferkammer bilden, wobei der in der $+^{ve}$-Kammer zirkulierende Elektrolyt während der Stromabgabe $Fe^{3+}$-Ionen und während der Energiespeicherung $Fe^{2+}$ enthält und der in der -Ve-Kammer zirkulierende Elektrolyt während der Stromabgabe Sulfidionen und während der Energiespeicherung Polysuflidionen enthält, wobei ein Leerlaufelektrolyt durch die Pufferkammer zirkuliert, und wobei der in der $+^{ve}$-Kammer zirkulierende Elektrolyt während der Energiespeicherung und der Stromabgabe zusätzlich ein lösbares ionisches Salz enthält, welches ein Natrium-, Kalium-, Lithium- oder Ammoniumsalz ist und als der Ladungsträger während der Energiespeicherung wirkt, und

b) mindestens teilweises elektrisches Wiederherstellen der Elektrolyten in den $+^{ve}$-Kammern und $-^{ve}$-Kammern durch Umkehren der Polarität an den $+^{ve}$- und $-^{ve}$-Elektroden und Anlegen einer ausreichenden Spannung, um die chemische Reaktion in der Umkehrrichtung anzutreiben.

**14.** Verfahren nach Anspruch 13, bei dem die $Fe^{3+}$-Ionen in dem in der $+^{ve}$-Kammer zirkulierenden Elektrolyten als das Chlorid-Bromid- oder Iodid-Salz vorliegen.

**15.** Verfahren nach Anspruch 13 oder 14, bei dem das ionische Salz ein Chlorid, Bromid oder Iodid ist.

**16.** Verfahren nach Anspruch 15, bei dem das ionische Salz Natriumchlorid oder Kaliumchlorid ist.

**17.** Verfahren nach einem der Ansprüche 13 bis 17, bei dem das Sulfid Natriumsulfid oder Kaliumsulfid ist.

**18.** Verfahren nach einem der Ansprüche 13 bis 17, bei dem die Elektrolyten chemisch aufgefrischt werden durch Zirkulieren des Elektrolyten von jeder Kammer zu einer Speichereinrichtung, die ein Elektrolytvolumen größer als das Zellenvolumen aufnimmt, für eine verlängerte Stromabgabe über einen längeren Entladungszyklus, als er alleine aufgrund des Zellenvolumens möglich wäre.

**19.** Verfahren nach einem der Ansprüche 13 bis 18, bei dem die Zellenstrukturen abwechselnden elektrochemischen Lade-/Entladezyklen unterworfen werden.

**Revendications**

**1.** Procédé électrochimique pour stocker de l'énergie et délivrer de l'énergie électrique, comprenant les étapes consistant :

(a) à maintenir des courants d'électrolytes circulant dans une seule cellule ou dans un réseau de structures de cellules répétées, chaque cellule étant munie d'une chambre (chambre $+^{Ve}$) contenant une électrode $+^{Ve}$ et d'une chambre (chambre $-^{Ve}$) contenant une électrode $-^{Ve}$, lesdites chambres étant séparées l'une de l'autre par une membrane échangeuse de cations, l'électrolyte circulant dans la chambre $+^{Ve}$ contenant des ions $Fe^{3+}$ lorsque de l'énergie électrique est délivrée et contenant des ions $Fe^{2+}$ lors du stockage de l'énergie, l'électrolyte circulant dans la chambre $-^{Ve}$ contenant des ions sulfure lorsque de l'énergie électrique est délivrée et contenant des ions polysulfure lors du stockage de l'énergie, et l'électrolyte circulant dans la chambre $+^{Ve}$ au cours du stockage d'énergie lorsque de l'énergie électrique est délivrée comprenant en outre un sel ionique soluble, qui est un sel de sodium, de potassium, de lithium ou d'ammonium, qui joue le rôle de porteur de charge au cours du stockage de l'énergie, et

(b) à rétablir électriquement de manière au moins partielle les électrolytes dans lesdites chambres $+^{Ve}$ et chambres $-^{Ve}$ en inversant la polarité sur les électrodes $+^{Ve}$ et $-^{Ve}$ et en fournissant une tension suffisante pour entraîner la réaction chimique dans le sens inverse.

**2.** Procédé suivant la revendication 1, dans lequel les ions $Fe^{3+}$ sont présents dans l'électrolyte circulant dans la chambre $-^{Ve}$ sous forme d'un chlorure, d'un bromure ou d'un iodure.

**3.** Procédé suivant la revendication 1 ou la revendication 2, dans lequel le sel ionique est un chlorure, un bromure ou un iodure.

**4.** Procédé suivant la revendication 3, dans lequel le sel ionique est le chlorure de sodium ou le chlorure de potassium.

**5.** Procédé suivant l'une quelconque des revendications précédentes, dans lequel le sulfure est le sulfure de sodium ou le sulfure de potassium.

**6.** Procédé suivant l'une quelconque des revendications précédentes, dans lequel les électrolytes sont renouvelés chimiquement par circulation de l'électrolyte provenant de chaque chambre à un moyen de stockage comprenant

un volume d'électrolyte supérieur au volume de la cellule pour délivrer de manière prolongée de l'énergie électrique au cours d'un cycle de décharge supérieur à celui qui serait obtenu avec le volume de cellule seul.

**7.** Procédé suivant l'une quelconque des revendications précédentes, dans lequel les structures de cellules sont soumises à des cycles alternés de charge, décharge électrochimique.

**8.** Procédé suivant l'une quelconque des revendications précédentes, qui comprend en outre la compensation de l'effet de variation du pH dans l'une des chambres ou les deux chambres.

**9.** Procédé suivant la revendication 8, dans lequel la compensation du pH comprend les étapes consistant à faire passer l'électrolyte circulant provenant de la chambre $^{+Ve}$ à travers une cellule d'ajustement de pH, à commander le passage d'un courant continu à travers ladite cellule d'ajustement du pH d'une électrode $+^{Ve}$ à une électrode $-^{Ve}$ de cette cellule, ce qui provoque la production d'ions $H^+$ et l'abaissement du pH de l'électrolyte.

**10.** Procédé suivant la revendication 8, dans lequel la compensation du pH comprend les étapes consistant à faire passer l'électrolyte circulant provenant de la chambre $-^{Ve}$ à travers une cellule d'ajustement du pH, à commander le passage d'un courant continu à travers ladite cellule d'ajustement du pH d'une électrode $+^{Ve}$ à une électrode $-^{Ve}$ de cette cellule, ce qui provoque la production d'ions $OH^-$ et l'élévation du pH de l'électrolyte.

**11.** Procédé suivant l'une quelconque des revendications précédentes, dans lequel les électrodes $+^{Ve}$ et $-^{Ve}$ comprennent des particules poreuses conductrices disposées de manière à accroître la surface disponible des électrodes et à accroître la mouillabilité de surface des électrodes, ce qui permet de réduire fortement la résistance de surface des électrodes.

**12.** Procédé suivant la revendication 11, dans lequel les particules poreuses conductrices sont des particules de charbon actif.

**13.** Procédé électrochimique pour stocker de l'énergie et délivrer de l'énergie électrique, comprenant les étapes consistant :

(a) à maintenir des courants d'électrolytes circulant dans une seule cellule ou dans un réseau de structures de cellules répétées, chaque cellule comprenant une chambre (chambre $+^{Ve}$) contenant une électrode $+^{Ve}$ et une chambre (chambre $-^{Ve}$) contenant une électrode $-^{Ve}$, lesdites chambres étant séparées l'une de l'autre par une pluralité de membranes échangeuses de cations lui forment au moins une chambre tampon, l'électrolyte circulant dans la chambre $+^{Ve}$ contenant des ions $Fe^{3+}$ lorsque de l'énergie électrique est délivrée et contenant des ions $Fe^{2+}$ lors du stockage de l'énergie, l'électrolyte circulant dans la chambre $-^{Ve}$ contenant des ions sulfure lorsque de l'énergie électrique est délivrée et contenant des ions polysulfure lors du stockage de l'énergie, un électrolyte libre circulant à travers la chambre tampon et l'électrolyte circulant dans la chambre $+^{Ve}$ au cours du stockage d'énergie et lorsque de l'énergie électrique est délivrée comprenant en outre un sel ionique soluble, qui est un sel de sodium, de potassium, de lithium ou d'ammonium, qui joue le rôle de porteur de charge au cours du stockage d'énergie, et

(b) a rétablir électriquement de manière au moins partielle les électrolytes dans lesdites chambres $+^{Ve}$ et chambres $-^{Ve}$ en inversant la polarité sur les électrodes $^{+Ve}$ et $-^{Ve}$ et en fournissant une tension suffisante pour entraîner la réaction chimique dans le sens inverse.

**14.** Procédé suivant la revendication 13, dans lequel les ions $Fe^{3+}$ sont fournis dans l'électrolyte circulant dans la chambre $+^{Ve}$ sous forme du chlorure, du bromure ou de l'iodure.

**15.** Procédé suivant la revendication 13 ou la revendicacion 14, dans lequel le sel ionique est un chlorure, bromure ou iodure.

**16.** Procédé suivant la revendication 15, dans lequel le sel ionique est le chlorure de sodium ou le chlorure de potassium.

**17.** Procédé suivant l'une quelconque des revendications 13 à 17, dans lequel le sulfure est le sulfure de sodium ou le sulfure de potassium.

**18.** Procédé suivant l'une quelconque des revendications 13 à 17, dans lequel les électrolytes sont renouvelés chimiquement en faisant circuler l'électrolyte provenant de chaque chambre à un moyen de stockage comprenant un volume d'électrolyte supérieur au volume de cellule pour délivrer de manière prolongée de l'énergie électrique au cours d'un cycle de décharge supérieur à celui qui serait obtenu avec le volume de cellule seul.

**19.** Procédé suivant l'une quelconque des revendications 13 à 18, dans lequel les structures de cellules sont soumises à des cycles alternés de charge/décharge électrochimique.

FIG. 1A.

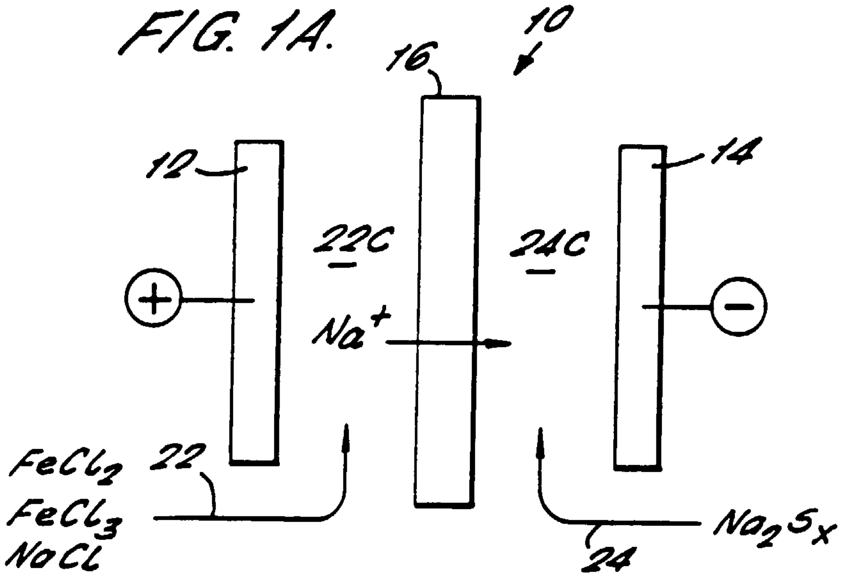
10
16
12
14
22C
24C
Na+
FeCl2
FeCl3
NaCl
22
24
Na2Sx

FIG. 1B.

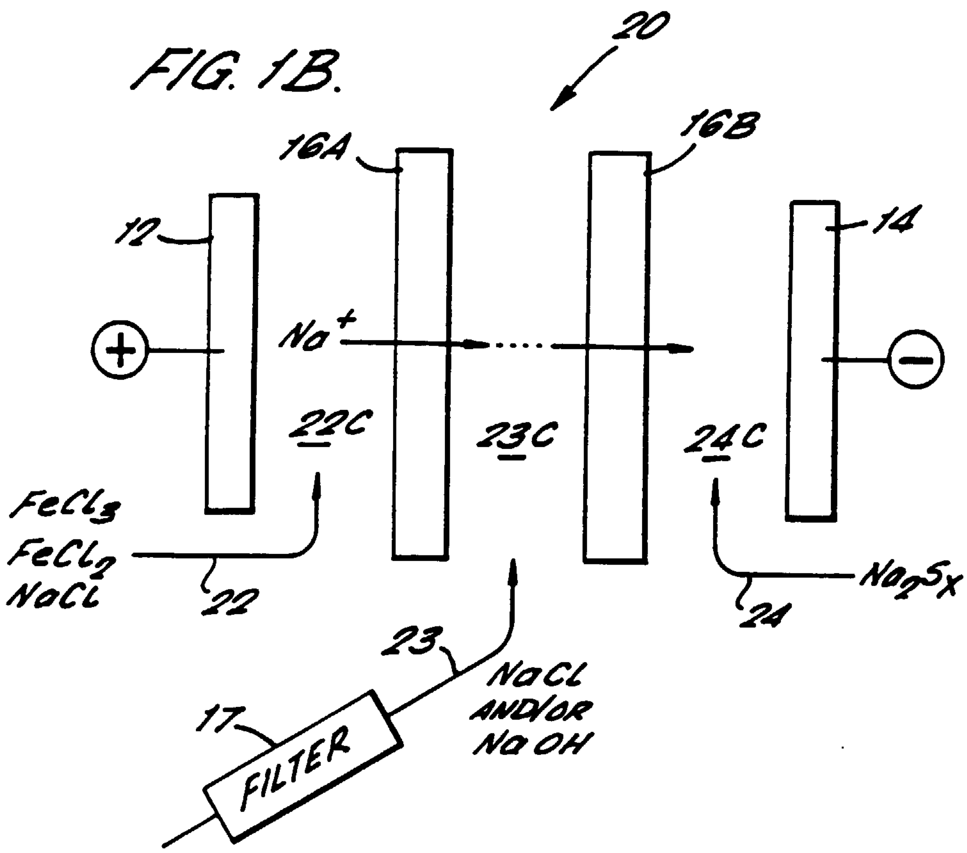
20
16A
16B
12
14
Na+
22C
23C
24C
FeCl3
FeCl2
NaCl
22
24
Na2Sx
23
NaCl
AND/OR
NaOH
17
FILTER

FIG. 1C.

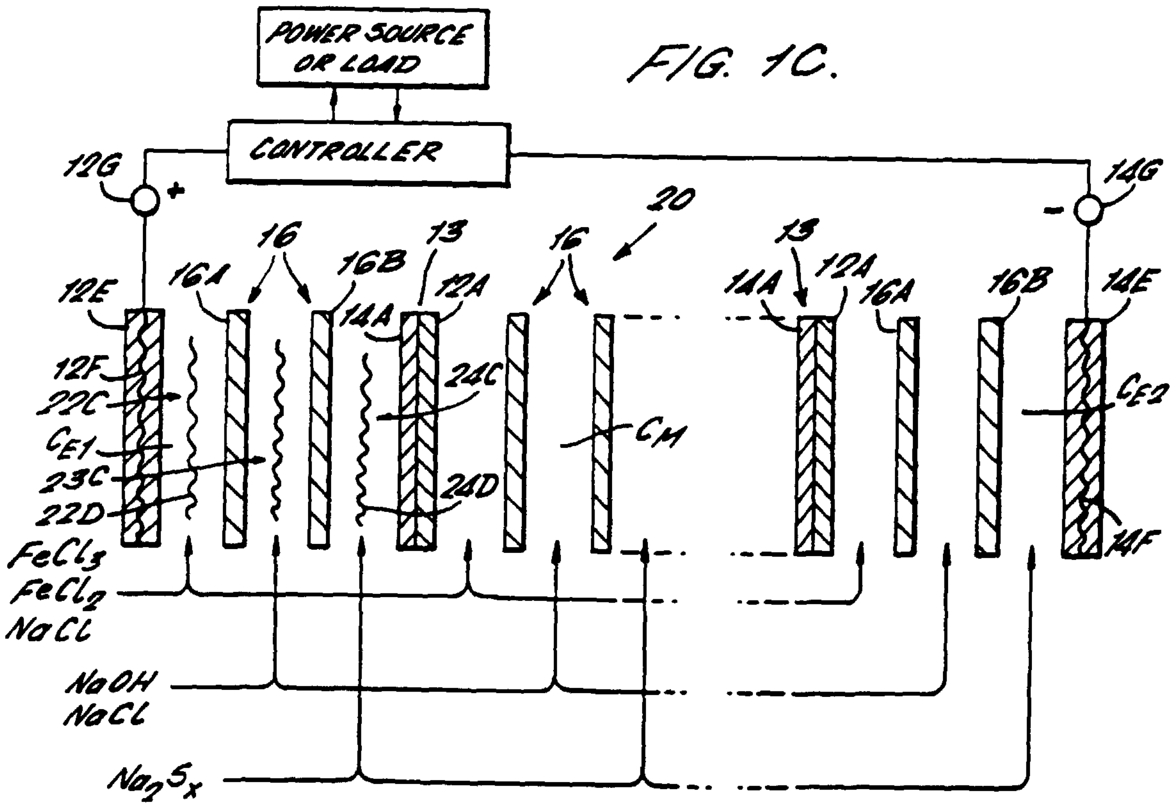
POWER SOURCE OR LOAD
CONTROLLER
12G
+
14G
-
20
16
16A
16B
13
12A
14A
12E
12F
22C
$C_{E1}$
23C
22D
24C
24D
$C_M$
13
14A
12A
16A
16B
14E
$C_{E2}$
14F
$FeCl_3$
$FeCl_2$
NaCl
NaOH
NaCl
$Na_2S_x$

FIG. 1D.

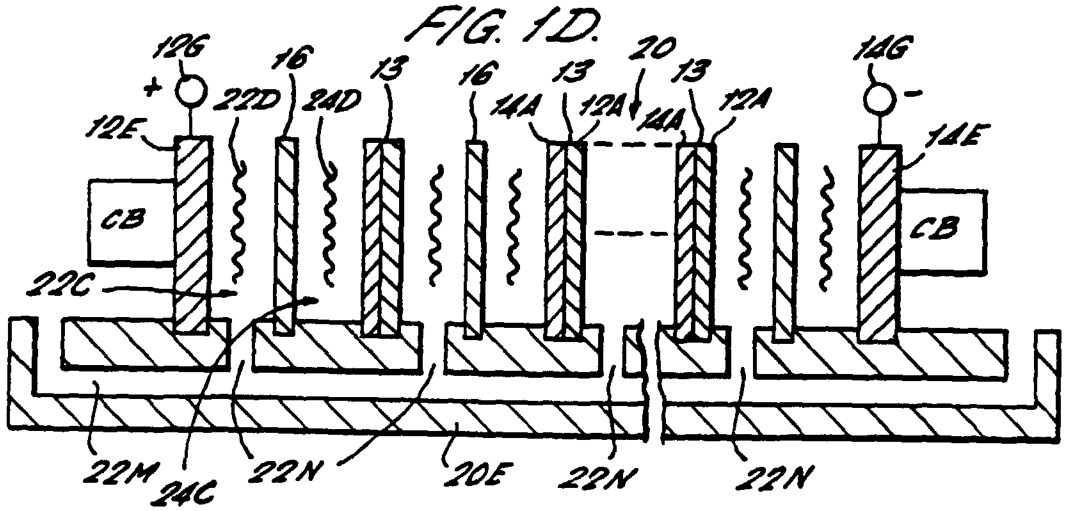
12G
+
16
22D
24D
13
16
14A
13
12A
20
14A
13
12A
14G
-
12E
14E
CB
CB
22C
22M
24C
22N
20E
22N
22N

FIG. 1E.

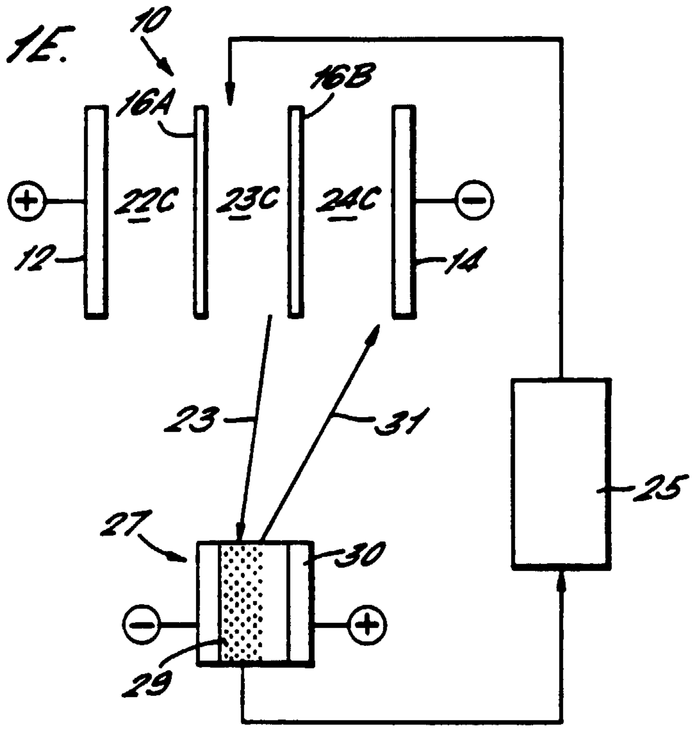
10
16A
16B
22C
23C
24C
12
14
23
31
25
27
30
29

FIG. 2A.

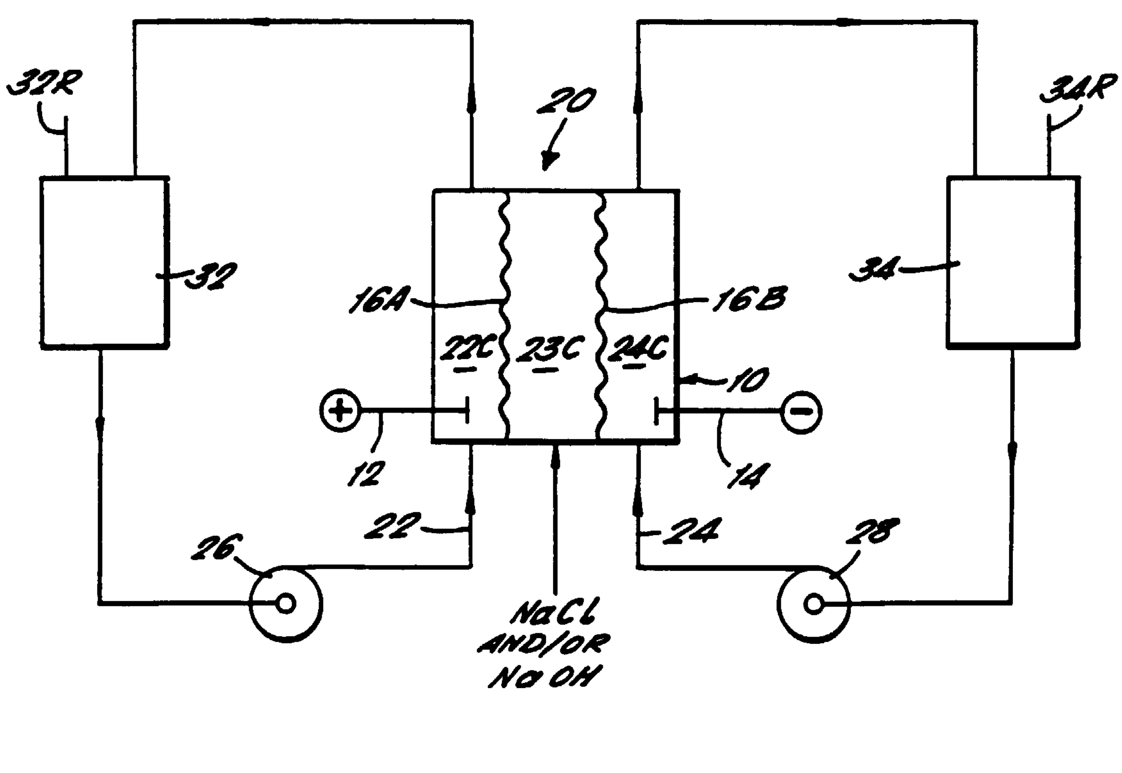
32R
34R
20
32
34
16A
16B
22C
23C
24C
10
12
14
22
24
26
28
NaCl
AND/OR
NaOH

FIG. 2B.

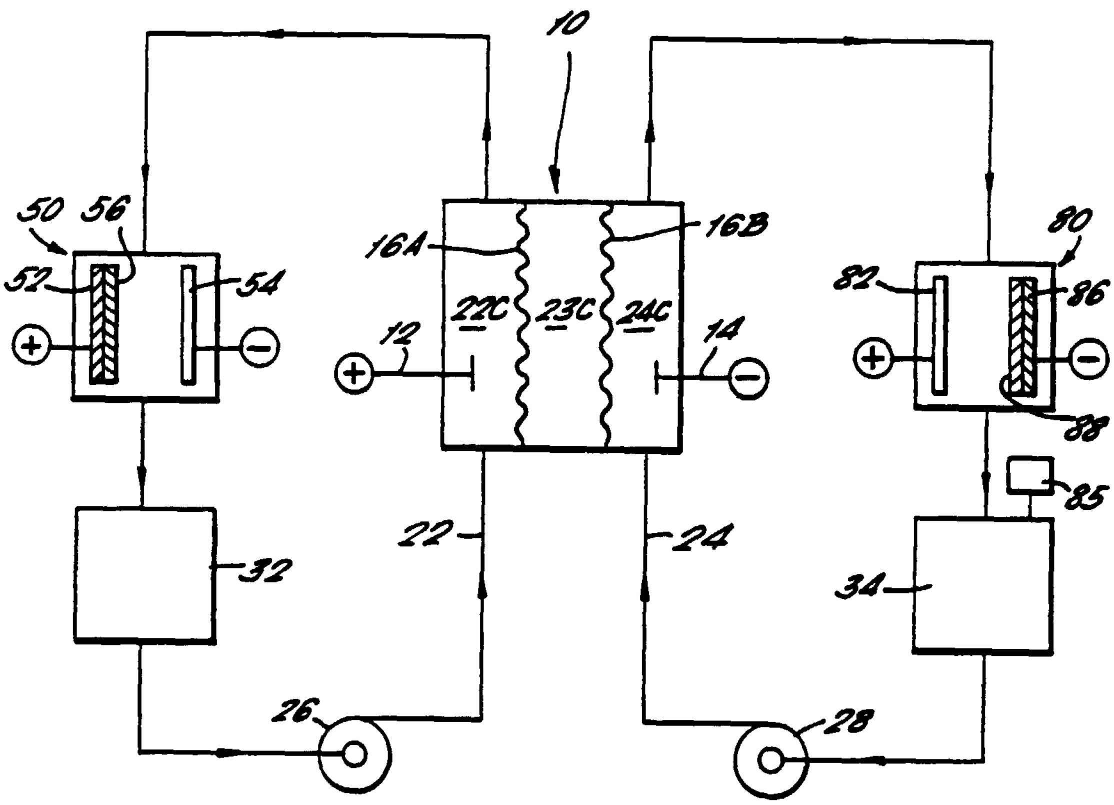
10
16A
16B
22C
23C
24C
12
14
50
56
52
54
80
82
86
88
85
32
34
22
24
26
28

FIG. 2C.

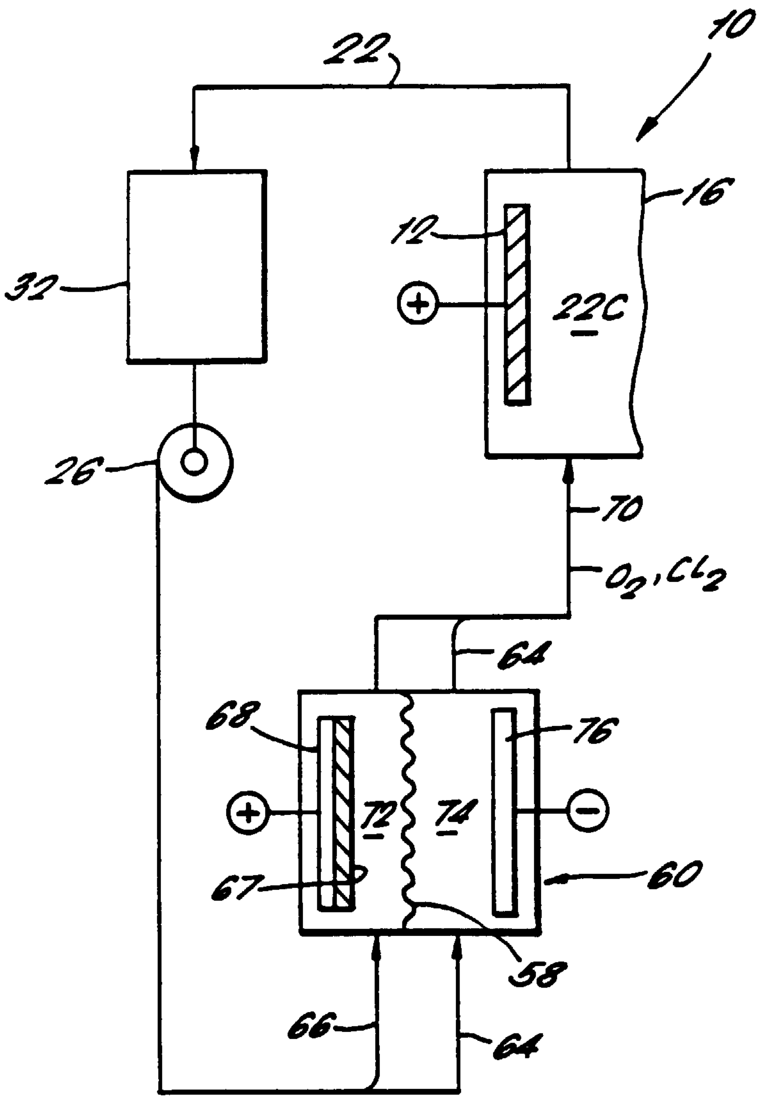

FIG. 3.

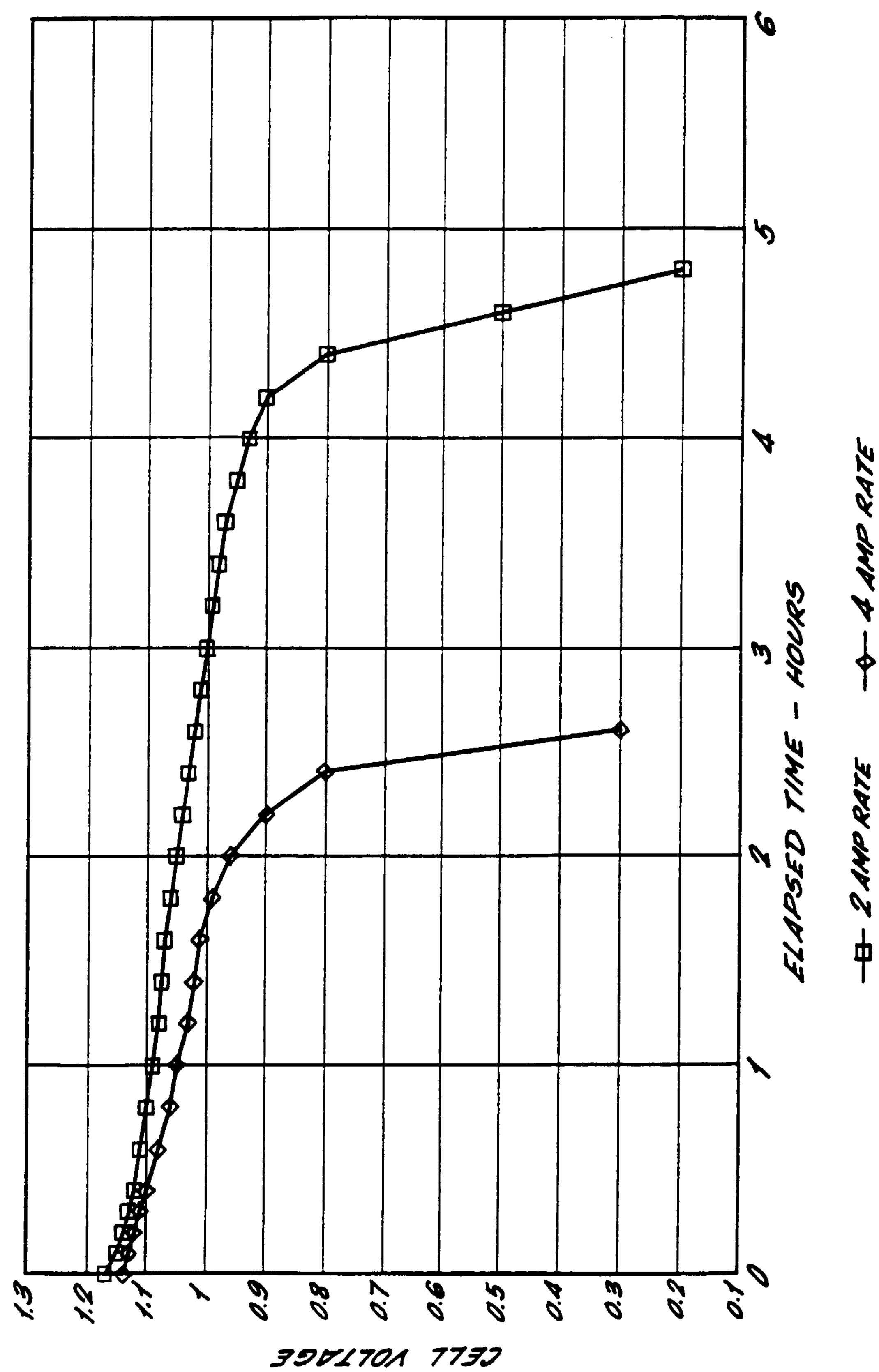
CELL VOLTAGE
1.3
1.2
1.1
1
0.9
0.8
0.7
0.6
0.5
0.4
0.3
0.2
0.1
0
1
2
3
4
5
6
ELAPSED TIME - HOURS
2 AMP RATE
4 AMP RATE

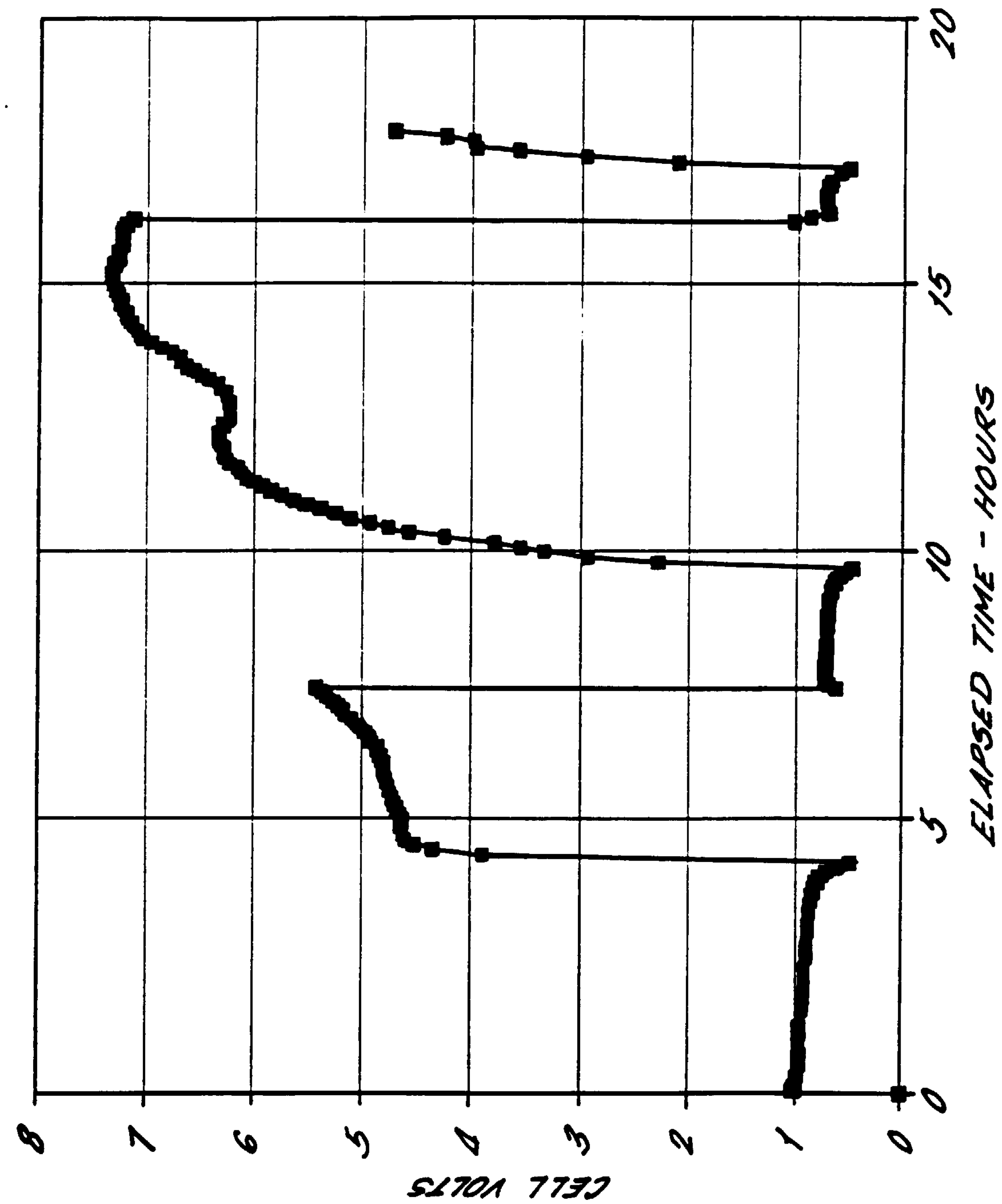


FIG. 4.

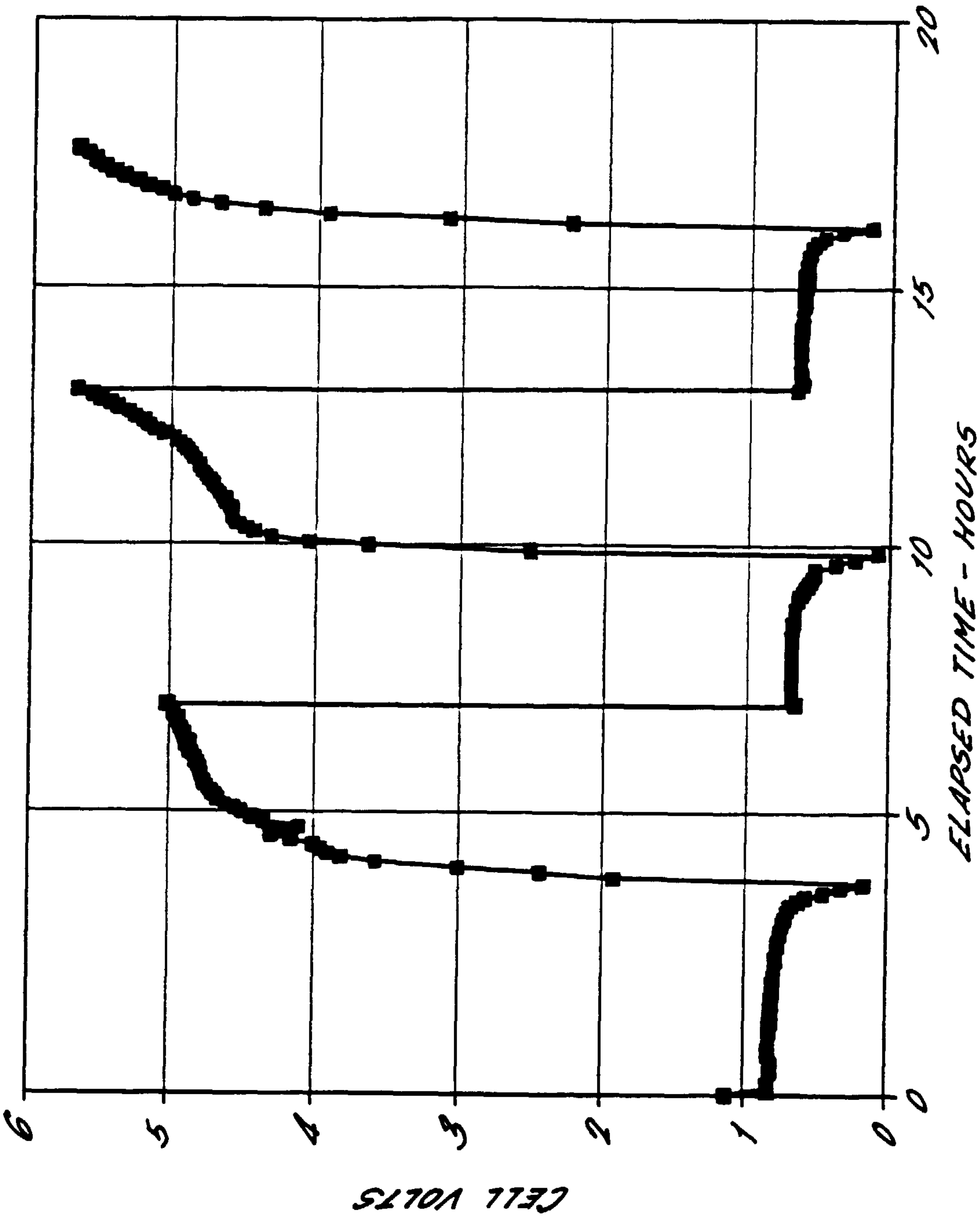


FIG.5.